# EUROPEAN PATENT SPECIFICATION

(11) **EP 3 829 201 B1**
(45) Date of publication and mention of the grant of the patent: **28.02.2024**
(21) Application number: 18927812.0
(22) Date of filing: 26.07.2018
(51) Int. Cl.: H04W 4/06, H04W 4/46, H04W 92/18, H04W 48/12

(54) **METHOD, DEVICE, AND SYSTEM FOR TRANSMITTING SYSTEM INFORMATION BETWEEN INTERNET-OF-VEHICLES DEVICES**
VERFAHREN, VORRICHTUNG UND SYSTEM ZUR ÜBERTRAGUNG VON SYSTEMINFORMATIONEN ZWISCHEN INTERNET-OF-VEHICLES-VORRICHTUNGEN
PROCÉDÉ, DISPOSITIF ET SYSTÈME DE TRANSMISSION D'INFORMATIONS SYSTÈME ENTRE DES DISPOSITIFS D'INTERNET DES VÉHICULES

(43) Date of publication of application: 02.06.2021
(73) Proprietor: Beijing Xiaomi Mobile Software Co., Ltd., Beijing 100085 (CN)
(72) Inventor: LIU, Yang, Beijing 100085 (CN); ZHAO, Qun, Beijing 100085 (CN)
(74) Representative: dompatent von Kreisler Selting Werner - Partnerschaft von Patent- und Rechtsanwälten mbB
(86) International application number: PCT/CN2018/097252
(87) International publication number: WO 2020/019253

(56) References cited:
- WO-A1-2018/062735
- WO-A1-2018/112751
- WO-A1-2018/112751
- CN-A- 105 898 856
- CN-A- 107 046 461
- CN-A- 107 295 626
- CN-A- 107 295 626
- CN-A- 107 979 452

## Description

### TECHNICAL FIELD

The present disclosure relates to a field of wireless communication technologies, and more particularly to a method, an apparatus, and a system for transmitting system information between Internet-of vehicles devices.

### BACKGROUND

The Internet-of vehicles is a new development direction of automobile technologies, which combines navigation and positioning, wireless communication and remote sensing technologies.

In the related art, synchronization and information transmission are performed between Internet-of vehicles devices by broadcasting system information. For example, one Internet-of vehicles device may send a synchronization signal and system information of the Internet-of vehicles device in a broadcast way. Another Internet-of vehicles device performs signal synchronization by the synchronization signal, and communicates with the Internet-of vehicles device based on the system information after receiving the synchronization signal and the system information. WO 2018/062735 A1 discloses a method and a device for controlling an access on the basis of a common resource in a communication system. An operating method of a terminal, according to an embodiment of the present invention, comprises the steps of: receiving configuration information of a common resource from a first base station among the plurality of base stations; receiving common information from the first base station through the common resource indicated by the configuration information; and performing a random access procedure with a second base station among the plurality of base stations by using the common information. Therefore, the performance of the communication system can be improved. CN 107295626 A discloses a method for sending a synchronization signal and a PSBCH (Physical Sidelink Broadcast Channel) in V2X communication, which includes the following steps: VUE (Vehicular User Equipment) determines the value of N according to the reference synchronization source thereof, wherein N represents a sidelink synchronization source ID; the VUE determines an SLSS (Sidelink Synchronization Signal) different from a D2D (Device-to-Device) system and/or a DMRS (Demodulation Reference Signal) of a PSBCH according to the value of N, wherein the SLSS includes a PSSS (Primary Sidelink Synchronization Signal) and an SSSS (Secondary Sidelink Synchronization Signal), and the DMRS of the PSBCH is determined by the DMRS sequence of the PSBCH and the orthogonal mask of the DMRS of the PSBCH; and the VUE sends the SLSS and the PSBCH. The invention further discloses a device for sending a synchronization signal and a PSBCH in V2X communication. By using the method and the device, a D2D terminal can be prevented from being guided to measure S-RSRP (Sidelink-Reference Signal Receiving Power) at the DMRS position of a PSBCH sent by VUE or from performing measurement at the DMRS position of a PSBCH sent by VUE to get an S-RSRP value satisfying a synchronization source reselection condition, and the influence of VUE on the D2D terminal synchronization process can be avoided simply and effectively. WO 2018/112751 A1 relates to the technical field of communications, and provides a system information transmission method and device. The method comprises: determining identifiers of currently supported a plurality of pieces of second system information from first system information, the first system information referring to system information periodically broadcasted by a base station currently, and the plurality of pieces of second system information referring to system information except the system information comprised in the first system information; determining transmission state of the plurality of pieces of second system information based on the identifiers of the plurality of pieces of second system information; and broadcasting the first system information, the first system information comprising the identifiers and the transmission state of the plurality of pieces of second system information, and the transmission state being used for indicating whether corresponding second system information is being transmitted. The system information transmission method provided by embodiments of the present invention improves the efficiency for transmission of system information and reduces signaling load of the base station.

### SUMMARY

The invention is defined by the attached set of claims.

### BRIEF DESCRIPTION OF THE DRAWINGS

The accompanying drawings, which are incorporated in and constitute a part of this specification, illustrate embodiments consistent with the present disclosure, and serve to explain the principle of the present disclosure together with the specification.
FIG. 1 is a schematic diagram illustrating an environment where a method for transmitting system information between Internet-of vehicles devices is implemented according to a part of exemplary embodiments.
FIG. 2 is a flow chart illustrating a method for transmitting system information between Internet-of vehicles devices according to an exemplary embodiment.
FIG. 3 is a flow chart illustrating a method for transmitting system information between Internet-of vehicles devices according to an exemplary embodiment.
FIG. 4 is a flow chart illustrating a method for transmitting system information between Internet-of vehicles devices according to an exemplary embodiment.
FIG. 5 is a flow chart illustrating a method for transmitting system information between Internet-of vehicles devices according to an exemplary embodiment.
FIG. 6 is a schematic diagram illustrating first system information related to an exemplary embodiment illustrated in FIG. 5.
FIG. 7 is a block diagram illustrating an apparatus for transmitting system information between Internet-of vehicles devices according to an exemplary embodiment.
FIG. 8 is a block diagram illustrating an apparatus for transmitting system information between Internet-of vehicles devices according to an exemplary embodiment.
FIG. 9 is a block diagram illustrating an Internet-of vehicles device according to an exemplary embodiment.

### DETAILED DESCRIPTION

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all implementations consistent with the present disclosure. Instead, they are merely examples of apparatuses and methods consistent with aspects of the present disclosure as detailed in the appended claims.

It should be understood that, as used herein, "several" means one or more, and "multiple" means two or more. The term "and/or" describes an association relationship between associated objects, and means that there may be three kinds of relationships. For example, A and/or B may mean that A exists alone, A and B exist at the same time, and B exists alone. The character "/" generally indicates that the associated objects are in an "or" relationship.

Internet-of vehicles communication is also referred as V2x (vehicle to everything) communication, which includes V2V (vehicle to vehicle) communication, V2I (vehicle to infrastructure) communication and V2P (vehicle to pedestrian) communication. The Internet-of vehicles technology may effectively improve traffic safety, improve traffic efficiency and enrich travel experience of people by the V2V communication, the V2I communication and the V2P communication.

An existing cellular communication technology is utilized to support the Internet-of vehicles communication, thereby effectively utilizing an existing base station deployment, reducing a device overhead, and facilitating to provide a service with a QoS (Quality of Service) guarantee, and meeting a requirement of an Internet-of vehicles service. Therefore, Rel-14/15 of an LTE (long term evolution) technology provides a support of a cellular network for the Internet-of vehicles communication V2x, i.e., C-V2x (cellular based V2x). In the C-V2x technology, a communication between a vehicle-mounted device and other device may be transferred via the base station and a core network, that is, a communication link between a terminal device and the base station in the existing cellular network is utilized for the communication (uplink/downlink communication). In another possible implementation, the vehicle-mounted device and the other device may also communicate directly via a direct link between the devices, for example, via Sidelink. Compared with the uplink/downlink communication, the side link communication has characteristics such as a short delay and a low overhead, which is suitable for direct communication between the vehicle-mounted device and other peripheral device with a close geographical position to the vehicle-mounted device.

The V2x Sidelink communication in the LTE may support some V2x applications in a basic safety aspect, such as exchanging a BSM (basic safety message) such as a CAM (cooperative awareness message) or a DENM (decentralized environmental notification message) for conducting speech broadcast communication. Recently, with the development of technologies such as automatic driving, in order to support a new V2x business, a new requirement is put forward for a performance of the V2x technology. Utilizing a 5G NR (new radio) technology to support a new V2x communication service and scenario is planned as an important content of Rel16 by a 3GPP (3rd generation partnership project). A 3GPP working group establishes some new business requirements that the V2x communication needs to meet, including vehicles platooning, extended sensors, advanced driving, and remote driving. Generally, the NR V2x Sidelink needs to provide a higher communication rate, a shorter communication delay and a more reliable communication quality.

Generally, a V2x device may perform communication with other devices via the Sidelink by means of a vehicle-mounted GNSS (global navigation satellite system) such as a GPS or a Beidou, or taking a synchronization signal broadcast by the base station as a synchronization reference signal of the V2x device to ensure synchronization between a sender and a receiver. However, considering universality of a V2x Internet-of vehicles application scenario, even when the V2x device is located outside a coverage of a base station of the cellular network and may not reliably receive a GNSS signal (for example, located at a mountain and a desert road), the V2x devices need to reliably communicate with each other via the Sidelink. Therefore, the LTE V2x supports synchronization via the Sidelink (direct link), that is, one V2x device may complete the synchronization between the V2x devices by receiving a synchronization signal broadcast by other V2x device. In the LTE V2x, a system message of the V2x communication is broadcast via both the PSBCH (physical Sidelink broadcast channel) and the synchronization signal. The broadcast content contains some information related to the synchronization and a system configuration.

The 3GPP launches research on the NR V2X in R16. The Sidelink of the V2x communication is mainly for opportunistic localized communication between the devices, and it needs to be ensured via broadcasting that the devices within a communication range have a same synchronization and frame structure understanding. Therefore, the broadcast system information is less than that of the 5G NR. Therefore, when a transmission mode for the system information of the 5G NR is directly used in the NR V2X, redundancy of the system information and waste of communication resources of the NR V2X may be caused, and the communication efficiency of the NR V2X is affected.

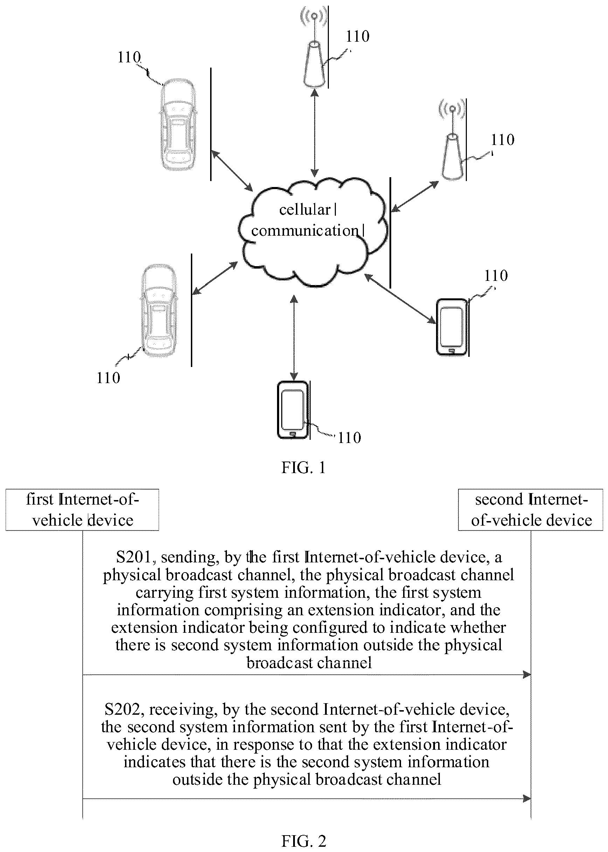

FIG. 1 is a schematic diagram illustrating an environment where a method for transmitting system information between Internet-of vehicles devices is implemented according to a part of exemplary embodiments. As illustrated in FIG. 1, the environment may include several Internet-of vehicles devices 110.

The Internet-of vehicles device 110 is a wireless communication device supporting the V2x technology. For example, the Internet-of vehicles device 110 may support the cellular mobile communication technology, such as the 4th generation mobile communication (4G) technology or 5G technology. The Internet-of vehicles device 110 may also support the next generation of mobile communication technology following the 5G technology.

For example, the Internet-of vehicles device 110 may be a vehicle-mounted communication device, such as an onboard computer with a wireless communication function, or a wireless communication device externally connected to the onboard computer.

Alternatively, the Internet-of vehicles device 110 may also be a roadside device, such as a street lamp, a signal lamp or other roadside device with the wireless communication function.

Alternatively, the Internet-of-vehicles device 110 may also be a user terminal device such as a mobile phone (or referred as a "cellular" phone), and a computer with a mobile terminal such as a portable, pocket-sized, hand-held, computer built-in or vehicle-mounted mobile device, which may be such as a station (STA), a subscriber unit, a subscriber station, a mobile station, a mobile, a remote station, an access point, a remote terminal, an access terminal, a user terminal, a user agent, a user device, or a user equipment (UE). For example, the Internet-of-vehicles device 110 may be a mobile terminal such as a smart phone, a tablet computer, or an e-book reader, or a smart wearable device such as smart glasses, a smart watch or a smart bracelet.

FIG. 2 is a flow chart illustrating a method for transmitting system information between Internet-of-vehicles devices according to an exemplary embodiment. As illustrated in FIG. 2, the method for transmitting the system information between the Internet-of-vehicles devices is applied to the environment illustrated in FIG. 1. The method may include the followings.

At block 201, a first Internet-of vehicles device sends a physical broadcast channel. The physical broadcast channel carries first system information. The first system information includes an extension indicator. The extension indicator is configured to indicate whether there is second system information outside the physical broadcast channel. A second Internet-of vehicles device receives the physical broadcast channel.

At block 202, the second Internet-of vehicles device receives the second system information sent by the first Internet-of vehicles device in response to that the extension indicator indicates that there is the second system information outside the physical broadcast channel.

In a 5G new radio system, system information is sent in a hierarchical manner, that is, a sender sends the PBCH (physical broadcast channel) firstly. The PBCH contains an MIB (master information block). The subsequent hierarchical transmission includes an SIB (system information block) 1, an RMSI (remaining minimum system information), and other SIB and OSI (open system interconnection) information. The PBCH contains necessary information for decoding the RMSI. The RMSI and the OSI respectively contain access information and other necessary system information. Therefore, an SSB (synchronous signal/ PBCH block) in the 5G new radio system occupies more time-frequency resources, which generally needs to occupy 4 or more OFDM (orthogonal frequency division multiplexing) symbols, and also needs a higher bandwidth in a time-frequency domain.

With the solution provided by embodiments of the present disclosure, in the V2x, the physical broadcast channel only contains basic system information (i.e., the first system information). The sender (i.e., the first Internet-of vehicles device) does not necessarily send system information other than the basic system information, and indicates by the extension indicator in the first system information whether the system information (i.e., the second system information) other than the first system information is sent. The second Internet-of vehicles device receives the second system information only when the received extension indicator is configured to indicate that there is the second system information.

In conclusion, with the solution illustrated by embodiments of the present disclosure, the first system information sent by the first Internet-of vehicles device to the second Internet-of vehicles device includes the extension indicator. The second Internet-of vehicles device receives the second system information only when the extension indicator indicates that there is the second system information outside the physical broadcast channel. That is, additional system information may be transmitted between the two Internet-of vehicles devices only when the system information other than the basic system information needs to be sent, thereby greatly simplifying the structure of the system information, saving time-frequency resources for transmitting the system information and improving the efficiency of transmitting the system information.

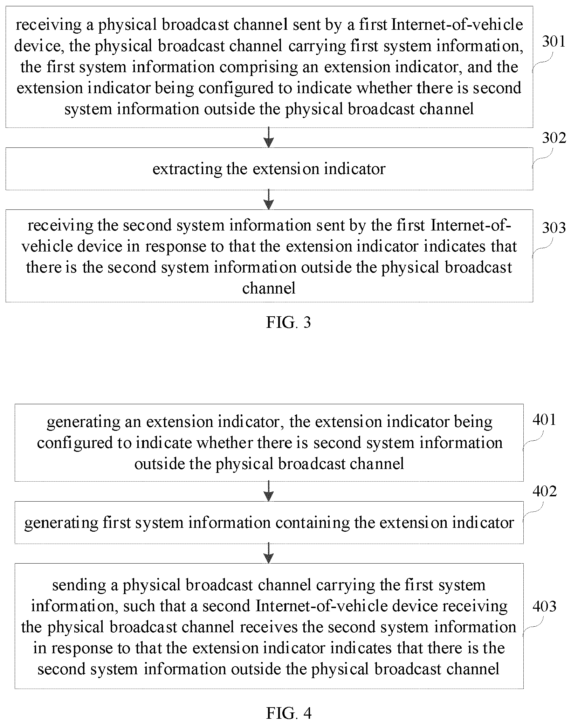

FIG. 3 is a flow chart illustrating a method for transmitting system information between Internet-of vehicles devices according to an exemplary embodiment. The method may be executed by the second Internet-of vehicles device in the embodiment illustrated in FIG. 2. The method may include the followings.

At block 301, a physical broadcast channel sent by a first Internet-of vehicles device is received. The physical broadcast channel carries first system information. The first system information includes an extension indicator. The extension indicator is configured to indicate whether there is second system information outside the physical broadcast channel.

At block 302, the extension indicator is extracted.

At block 303, the second system information sent by the first Internet-of vehicles device is received in response to that the extension indicator indicates that there is the second system information outside the physical broadcast channel.

Alternatively, receiving the second system information sent by the first Internet-of vehicles device in response to that the extension indicator indicates that there is the second system information outside the physical broadcast channel includes: obtaining extension configuration information contained in the first system information in response to that the extension indicator indicates that there is the second system information outside the physical broadcast channel, the extension configuration information being configured to indicate a resource position of the second system information; and receiving the second system information sent by the first Internet-of vehicles device based on the resource position of the second system information.

Alternatively, the second system information includes resource pool information. The resource pool information is configured to indicate a time-frequency position of a communication resource for communicating with the first Internet-of vehicles device.

Alternatively, receiving the physical broadcast channel sent by the first Internet-of vehicles device includes: receiving the physical broadcast channel sent by the first Internet-of vehicles device via Sidelink.

Alternatively, the first system information further includes at least one of: network coverage information, a system frame number, system frame instructions, position information of a demodulation reference signal, and time indication information of a synchronous broadcast block.

In conclusion, with the solution illustrated by embodiments of the present disclosure, the first system information sent by the first Internet-of vehicles device to the second Internet-of vehicles device includes the extension indicator. The second Internet-of vehicles device receives the second system information only when the extension indicator indicates that there is the second system information outside the physical broadcast channel. That is, additional system information may be transmitted between the two Internet-of vehicles devices only when the system information other than the basic system information needs to be sent, thereby greatly simplifying the structure of the system information, saving time-frequency resources for transmitting the system information and improving the efficiency of transmitting the system information.

FIG. 4 is a flow chart illustrating a method for transmitting system information between Internet-of vehicles devices according to an exemplary embodiment. The method may be executed by the first Internet-of vehicles device in the embodiment illustrated in FIG. 2. The method may include the followings.

At block 401, an extension indicator is generated. The extension indicator is configured to indicate whether there is second system information outside the physical broadcast channel.

At block 402, first system information containing the extension indicator is generated.

At block 403, a physical broadcast channel carrying the first system information is sent, such that a second Internet-of vehicles device receiving the physical broadcast channel receives the second system information in response to that the extension indicator indicates that there is the second system information outside the physical broadcast channel.

Alternatively, generating the first system information containing the extension indicator includes: generating the first system information containing the extension indicator and extension configuration information in response to that there is the second system information outside the physical broadcast channel. The extension configuration information is configured to indicate a resource position of the second system information.

Alternatively, the method further includes: sending the second system information based on the resource position of the second system information.

In conclusion, with the solution illustrated by embodiments of the present disclosure, the first system information sent by the first Internet-of vehicles device to the second Internet-of vehicles device includes the extension indicator. The second Internet-of vehicles device receives the second system information only when the extension indicator indicates that there is the second system information outside the physical broadcast channel. That is, additional system information may be transmitted between the two Internet-of vehicles devices only when the system information other than the basic system information needs to be sent, thereby greatly simplifying the structure of the system information, saving time-frequency resources for transmitting the system information and improving the efficiency of transmitting the system information.

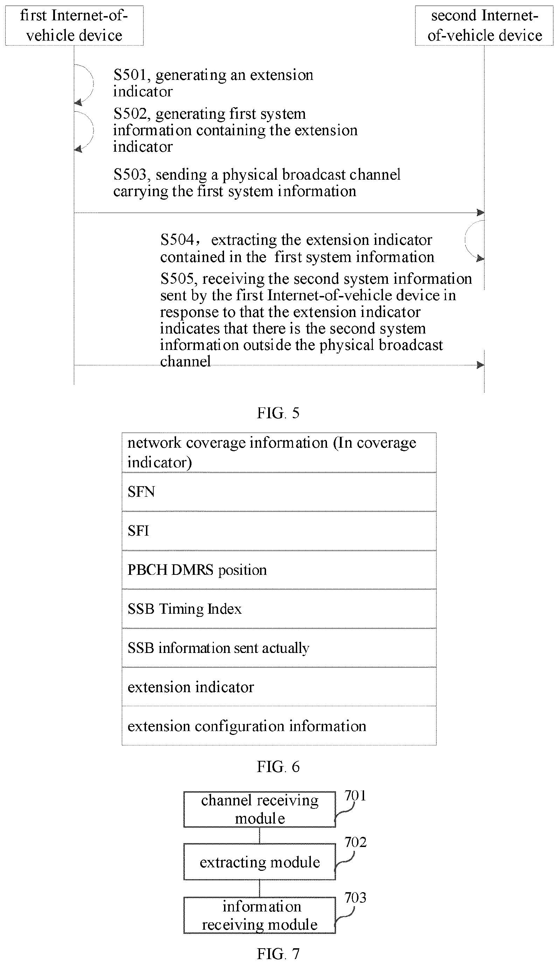

FIG. 5 is a flow chart illustrating a method for transmitting system information between Internet-of vehicles devices according to an exemplary embodiment. As illustrated in FIG. 5, the method for transmitting the system information between the Internet-of vehicles devices is applied to the environment illustrated in FIG. 1. The method may include the following.

At block 501, a first Internet-of vehicles device generates an extension indicator. The extension indicator is configured to indicate whether there is second system information outside a physical broadcast channel.

The first Internet-of vehicles device may send the physical broadcast channel via Sidelink. The Sidelink is a kind of direct link between devices. Accordingly, a second Internet-of vehicles device may receive the physical broadcast channel sent by the first Internet-of vehicles device via the Sidelink.

In embodiments of the present disclosure, system information of the V2X communication may be sent mainly in a single-level way, but optionally, in a multi-level way, that is, the system only defines one basic physical broadcast channel in the Sidelink. In the Sidelink, the basic physical broadcast channel may also be called the PSBCH. The basic physical broadcast channel contains basic system information (i.e., the first system information) required for V2X communication.

Before sending the physical broadcast channel, the first Internet-of vehicles device firstly determines whether the second system information needs to be sent outside the physical broadcast channel in addition to the first system information carried in the physical broadcast channel, and determines whether the second system information needs to be sent outside the physical broadcast channel, to generate the extension indicator.

The extension indicator may be a field that may take different values. For example, a value range of the extension indicator is 0 or 1. When the first Internet-of vehicles device determines that the second system information does not need to be sent outside the physical broadcast channel, the value of the extension indicator is set to 0, which indicates that there is no second system information outside the physical broadcast channel. On the contrary, when the second Internet-of vehicles device determines that the second system information needs to be sent outside the physical broadcast channel, the value of the extension indicator is set to 1, which indicates that there is the second system information outside the physical broadcast channel.

Alternatively, the first Internet-of-vehicles device further generates extension configuration information in response to that the extension indicator indicates that there is the second system information outside the physical broadcast channel. The extension configuration information is configured to indicate a resource position of the second system information.

The resource position indicated by the extension configuration information is a resource position other than a resource position occupied by the physical broadcast channel. For example, a time-frequency resource indicated by the resource position may be a resource after the time-frequency resource occupied by the physical broadcast channel in time domain.

At block 502, the first Internet-of vehicles device generates first system information including the extension indicator.

Alternatively, the first Internet-of-vehicles device generates the first system information including the extension indicator and the extension configuration information in response to that there is the second system information outside the physical broadcast channel. The extension configuration information is configured to indicate the resource position of the second system information.

In embodiments of the present disclosure, the first Internet-of-vehicles device may generate the first system information including the extension indicator with the value of 0 in response to that the second system information does not need to be sent outside the physical broadcast channel. The first system information may not include the extension configuration information.

The first Internet-of-vehicles device may generate the first system information including the extension indicator with the value of 1 in response to that the second system information needs to be sent outside the physical broadcast channel. The first system information includes the extension configuration information.

In another possible implementation, whether or not the second system information needs to be sent outside the physical broadcast channel, the first Internet-of-vehicles device may generate the first system information including the extension indicator and the extension configuration information. A value of the extension configuration information is a null when there is no need to send the second system information outside the physical broadcast channel (for example, the value of the extension indicator is 0).

Alternatively, please refer to FIG. 6, which is a schematic diagram illustrating first system information related to embodiments of the present disclosure. As illustrated in FIG. 6, in addition to the extension indicator and the extension configuration information, the first system information may also include at least one of: network coverage information (In coverage indicator), system frame number (SFN), system frame instructions (SFI), position information of a demodulation reference signal of the physical broadcast channel (PBCH DMRS position), time indication information of a synchronous broadcast block (SSB timing index), and SSB information actually transmitted.

The network coverage information may be configured to indicate whether the first Internet-of vehicles device is currently located in a coverage area of a cellular network, and related information of the cellular network currently covering the first Internet-of vehicles device, such as a cell identifier.

The system frame number is contained in a system message and broadcast on the physical broadcast channel for paging groups and scheduling system information.

The system frame instruction is configured to indicate a frame structure of a current message. The 5G NR system supports a flexible frame structure. For example, a 5G frame structure may be composed of a fixed part and a flexible part. The fixed part is the same as the LTE, and a length of a radio frame and a length of a subframe are fixed, which facilitates synchronization of the time slot and the frame structure in an LTE and NR co-deployment mode, simplifies cell search and frequency measurement. The time slot and the character length in the flexible part may be flexibly defined based on a subcarrier interval. In other words, the frame structure in the 5G NR system is not fixed. In embodiments of the present disclosure, the first system information may carry the system frame instruction for indicating the frame structure of the current message, such that the receiver may quickly determine the frame structure of the current message.

The position information of the demodulation reference signal of the physical broadcast channel indicates a time-frequency position of the demodulation reference signal.

The time indication information of the synchronous broadcast block is configured to indicate a timing index of the synchronous broadcast block.

The SSB information actually transmitted is configured to indicate a part of a system-defined SSB to which the transmitted SSB belongs. Since the PBCH in the 5G NR system supports beam transmission, and the number of beams actually sent may be different, the SSB information actually sent needs to be given in the PBCH.

At block 503, the first Internet-of vehicles device sends the physical broadcast channel carrying the first system information, and the second Internet-of vehicles device receives the physical broadcast channel.

In embodiments of the present disclosure, the first Internet-of vehicles device may send the physical broadcast channel carrying the first system information via a wireless signal based on a preset transmission period, and the second Internet-of vehicles device detects the wireless signal and receives the physical broadcast channel.

At block 504, the second Internet-of vehicles device extracts the extension indicator contained in the first system information in the physical broadcast channel.

The second Internet-of vehicles device detects the wireless signal, performs signal synchronization based on a synchronization signal in the wireless signal, analyzes the first system information in the physical broadcast channel, and extracts the extension indicator in the first system information.

The extension indicator may be set in a specified field of the first system information. The second Internet-of vehicles device extracts the extension indicator from the specified field of the first system information after parsing the first system information.

At block 505, the first Internet-of vehicles device sends the second system information, and the second Internet-of vehicles device receives the second system information sent by the first Internet-of vehicles device, in response to that the extension indicator indicates that there is the second system information outside the physical broadcast channel.

The first Internet-of vehicles device may send the second system information based on the resource position indicated by the extension configuration information when the second system information needs to be sent outside the physical broadcast channel. Accordingly, the first Internet-of vehicles device may not send the second system information when there is no need to send the second system information outside the physical broadcast channel.

The second Internet-of vehicles device may determine whether there is the second system information based on the value of the extension indicator after obtaining the extension indicator. In response to that it is determined that there is the second system information (for example, the value of the extension indicator is 1), the second Internet-of vehicles device may further obtain the extension configuration information in the first system information and receive the second system information sent by the first Internet-of vehicles device based on the resource position indicated by the extension configuration information.

The second Internet-of vehicles device does not need to perform the step of receiving the second system information when the second Internet-of vehicles device obtains the extension indicator and determines that there is no second system information based on the value of the extension indicator (for example, the value of the extension indicator is 0).

Alternatively, the second system information includes resource pool information. The resource pool information is configured to indicate a time-frequency position of a communication resource for communicating with the first Internet-of-vehicles device.

In embodiments of the present disclosure, the first Internet-of-vehicles device may put the resource pool information into the second system information of the basic system information to improve the flexibility of the system.

In conclusion, with the solution illustrated by embodiments of the present disclosure, the first system information sent by the first Internet-of-vehicles device to the second Internet-of-vehicles device includes the extension indicator. The second Internet-of-vehicles device receives the second system information only when the extension indicator indicates that there is the second system information outside the physical broadcast channel. That is, additional system information may be transmitted between the two Internet-of-vehicles devices only when the system information other than the basic system information needs to be sent, thereby greatly simplifying the structure of the system information, saving time-frequency resources for transmitting the system information and improving the efficiency of transmitting the system information.

The following is apparatus embodiments of the present disclosure, which may be configured to execute the method embodiments of the present disclosure. For details not disclosed in the apparatus embodiments of the present disclosure, please refer to the method embodiments of the present disclosure.

FIG. 7 is a block diagram illustrating an apparatus for transmitting system information between Internet-of-vehicles devices according to an exemplary embodiment. As illustrated in FIG. 7, the apparatus for transmitting the system information between the Internet-of-vehicles devices may be implemented as all or a part of the Internet-of-vehicles device in the environment illustrated in FIG. 1 by hardware or a combination of software and hardware, to perform the actions performed by the second Internet-of vehicles device in any of embodiments illustrated in FIG. 2, FIG. 3 or FIG. 5. The apparatus for transmitting the system information between the Internet-of-vehicles devices may include: a channel receiving module 701, an extracting module 702, and an information receiving module 703.

The channel receiving module 701 is configured to receive a physical broadcast channel sent by a first Internet-of vehicles device. The physical broadcast channel carries first system information. The first system information includes an extension indicator. The extension indicator is configured to indicate whether there is second system information outside the physical broadcast channel.

The extracting module 702 is configured to extract the extension indicator.

The information receiving module 703 is configured to receive the second system information sent by the first Internet-of vehicles device in response to that the extension indicator indicates that there is the second system information outside the physical broadcast channel.

Alternatively, the information receiving module 703 is configured to: obtain extension configuration information contained in the first system information in response to that the extension indicator indicates that there is the second system information outside the physical broadcast channel, the extension configuration information being configured to indicate a resource position of the second system information; and receive the second system information sent by the first Internet-of vehicles device based on the resource position of the second system information.

Alternatively, the second system information includes resource pool information. The resource pool information is configured to indicate a time-frequency position of a communication resource for communicating with the first Internet-of vehicles device.

Alternatively, the channel receiving module 701 is configured to: receive the physical broadcast channel sent by the first Internet-of vehicles device via Sidelink.

Alternatively, the first system information further includes at least one of: network coverage information, a system frame number, system frame instructions, position information of a demodulation reference signal, and time indication information of a synchronous broadcast block.

In conclusion, with the solution illustrated by embodiments of the present disclosure, the first system information sent by the first Internet-of vehicles device to the second Internet-of vehicles device includes the extension indicator. The second Internet-of vehicles device receives the second system information only when the extension indicator indicates that there is the second system information outside the physical broadcast channel. That is, additional system information may be transmitted between the two Internet-of vehicles devices only when system information other than the basic system information needs to be sent, thereby greatly simplifying the structure of the system information, saving time-frequency resources for transmitting the system information and improving the efficiency of transmitting the system information.

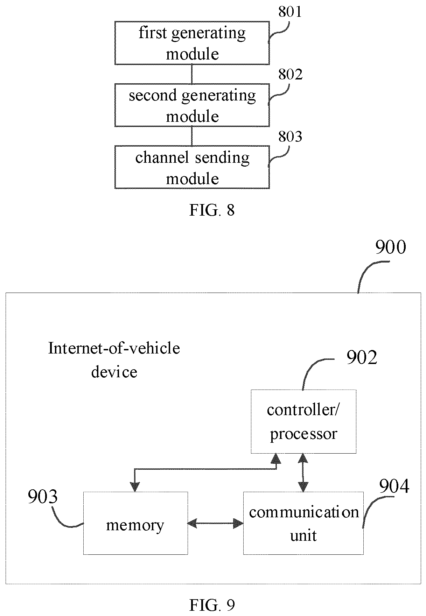

FIG. 8 is a block diagram illustrating an apparatus for transmitting system information between Internet-of vehicles devices according to an exemplary embodiment. As illustrated in FIG. 8, the apparatus for transmitting the system information between the Internet-of vehicles devices may be implemented as all or a part of the Internet-of vehicles device in the environment illustrated in FIG. 1 by hardware or a combination of software and hardware, to perform the action performed by the first Internet-of vehicles device in any of embodiments illustrated in FIG. 2, FIG. 4 or FIG. 5. The apparatus for transmitting the system information between the Internet-of vehicles devices may include: a first generating module 801, a second generating module 802, and a channel sending module 803.

The first generating module 801 is configured generate an extension indicator. The extension indicator is configured to indicate whether there is second system information outside the physical broadcast channel.

The second generating module 802 is configured generate first system information containing the extension indicator.

The channel sending module 803 is configured to send a physical broadcast channel carrying the first system information, such that a second Internet-of-vehicles device receiving the physical broadcast channel receives the second system information in response to that the extension indicator indicates that there is the second system information outside the physical broadcast channel.

Alternatively, the second generating module 802 is configured to: generate the first system information containing the extension indicator and extension configuration information in response to that there is the second system information outside the physical broadcast channel. The extension configuration information is configured to indicate a resource position of the second system information.

Alternatively, the apparatus further includes an information sending module configured to send the second system information based on the resource position of the second system information.

In conclusion, with the solution illustrated by embodiments of the present disclosure, the first system information sent by the first Internet-of vehicles device to the second Internet-of vehicles device includes the extension indicator. The second Internet-of vehicles device receives the second system information only when the extension indicator indicates that there is the second system information outside the physical broadcast channel. That is, additional system information may be transmitted between the two Internet-of vehicles devices only when system information other than the basic system information needs to be sent, thereby greatly simplifying the structure of the system information, saving time-frequency resources for transmitting the system information and improving the efficiency of transmitting the system information.

An exemplary embodiment of the present disclosure also provides a system for transmitting system information between Internet-of vehicles devices. The system includes: a first Internet-of vehicles device and a second Internet-of-vehicles device.

The first Internet-of vehicles device includes the apparatus for transmitting the system information between the Internet-of vehicles devices according to the embodiment illustrated in FIG. 8.

The second Internet-of vehicles device includes the apparatus for transmitting the system information between the Internet-of vehicles devices according to the embodiment illustrated in FIG. 7.

It should be noted that, the division of the above functional modules is taken only as an example for description when the apparatus provided in the above embodiments realizes its functions. In an actual application, the above functions may be assigned to different functional modules based on an actual requirement, that is, a content structure of the apparatus may be divided into different functional modules to complete all or a part of the functions described above.

With regard to the apparatus in the above embodiments, the specific manner in which each module performs operations has been described in detail in the embodiments related to the method, which is not elaborated here.

An exemplary embodiment of the present disclosure provides a device for transmitting system information between Internet-of vehicles devices. The device may implement all or a part of actions performed by the second Internet-of vehicles device in embodiments illustrated in FIG. 2, FIG. 3, or FIG. 5 of the present disclosure. The device for transmitting the system information between the Internet-of vehicles devices includes: a processor and a memory. The memory is configured to store instructions executable by the processor.

The processor is configured to: receive a physical broadcast channel sent by a first Internet-of vehicles device, the physical broadcast channel carrying first system information, the first system information including an extension indicator, and the extension indicator being configured to indicate whether there is second system information outside the physical broadcast channel; extract the extension indicator; and receive the second system information sent by the first Internet-of vehicles device in response to that the extension indicator indicates that there is the second system information outside the physical broadcast channel.

Alternatively, receiving the second system information sent by the first Internet-of vehicles device in response to that the extension indicator indicates that there is the second system information outside the physical broadcast channel includes: obtaining extension configuration information contained in the first system information in response to that the extension indicator indicates that there is the second system information outside the physical broadcast channel, the extension configuration information being configured to indicate a resource position of the second system information; and receiving the second system information sent by the first Internet-of vehicles device based on the resource position of the second system information.

Alternatively, the second system information includes resource pool information. The resource pool information is configured to indicate a time-frequency position of a communication resource for communicating with the first Internet-of-vehicles device.

Alternatively, receiving the physical broadcast channel sent by the first Internet-of vehicles device includes: receiving the physical broadcast channel sent by the first Internet-of vehicles device via Sidelink.

Alternatively, the first system information further includes at least one of: network coverage information, a system frame number, system frame instructions, position information of a demodulation reference signal, and time indication information of a synchronous broadcast block.

An exemplary embodiment of the present disclosure provides a device for transmitting system information between Internet-of vehicles devices. The device may implement all or a part of actions performed by the first Internet-of vehicles device in embodiments illustrated in FIG. 2, FIG. 4, or FIG. 5 of the present disclosure. The device for transmitting the system information between the Internet-of vehicles devices includes: a processor and a memory. The memory is configured to store instructions executable by the processor.

The processor is configured to: generate an extension indicator, the extension indicator being configured to indicate whether there is second system information outside the physical broadcast channel; generate first system information containing the extension indicator; and send a physical broadcast channel carrying the first system information, such that a second Internet-of vehicles device receiving the physical broadcast channel receives the second system information in response to that the extension indicator indicates that there is the second system information outside the physical broadcast channel.

Alternatively, generating the first system information containing the extension indicator includes: generating the first system information containing the extension indicator and extension configuration information in response to that there is the second system information outside the physical broadcast channel, the extension configuration information being configured to indicate a resource position of the second system information.

Alternatively, the processor is further configured to: send the second system information based on the resource position of the second system information.

The above mainly takes the Internet-of vehicles device as an example to introduce the solution provided by embodiments of the present disclosure. It may be understood that, in order to implement the above functions, the Internet-of vehicles device includes corresponding hardware structures and/or software modules for executing respective functions. In combination with modules and algorithm steps of each example described in embodiments of the present disclosure, embodiments of the present disclosure may be implemented in the form of hardware or a combination of hardware and computer software. That a certain function is executed by the hardware or computer software drives the hardware depends on a specific application and a design constraint of the technical solution. The skilled in the art may use different methods to implement the described functions for each specific application, but this implementation should not be considered as exceeding the scope of the technical solution of embodiments of the present disclosure.

FIG. 9 is a block diagram illustrating an Internet-of vehicles device according to an exemplary embodiment.

The Internet-of vehicles device 900 includes a communication unit 904 and a processor 902. The processor 902 may also be a controller, which is represented as a "controller/processor 902" in FIG. 9. The communication unit 904 is configured to support the Internet-of vehicles device to communicate with other network entities (such as other Internet-of vehicles device).

Further, the Internet-of vehicles device 900 may further include a memory 903. The memory 903 is configured to store program codes and data of the Internet-of vehicles device 900.

It may be understood that, FIG. 9 only illustrates a simplified design of the Internet-of vehicles device 900. In an actual application, the Internet-of vehicles device 900 may include any number of processors, controllers, memories, communication units, etc. All the Internet-of vehicles devices that may implement embodiments of the present disclosure are within the protection scope of embodiments of the present disclosure.

The skilled in the art should realize that, the functions described in embodiments of the present disclosure may be realized by hardware, software, firmware or any combination thereof in one or more of the above examples. These functions may be stored in a computer readable medium or transmitted as one or more instructions or codes on the computer readable medium when implemented in the software. The computer readable medium includes a computer storage medium and a communication medium. The communication medium includes any medium that facilitates to transmit a computer program from one place to another. The storage medium may be any available medium that may be accessed by a general purpose or special purpose computer.

Embodiments of the present disclosure also provide a computer storage medium for storing computer software instructions used by the first Internet-of vehicles device or the second Internet-of vehicles device, which contains a program designed for performing the method for transmitting the system information between the Internet-of vehicles devices.

Other implementations of the present disclosure will be apparent to the skilled in the art from consideration of the specification and practice of the present disclosure disclosed here. It is intended that the specification and examples be considered as exemplary only, with a true scope of the present disclosure being indicated by the following claims.

It should be understood that the present disclosure is not limited to the exaction construction that has been described above and illustrated in the accompanying drawings, and that various modifications and changes may be made without departing from the scope thereof. The scope of the present disclosure only be limited by the appended claims.

## Claims

1. A method for transmitting system information between Internet-of vehicles devices, performed by a second Internet-of vehicles device, the method comprising:
receiving a physical broadcast channel sent by a first Internet-of-vehicles device via a side link, wherein the physical broadcast channel carries first system information, the first system information comprises an extension indicator which is configured to indicate whether there is second system information outside the physical broadcast channel (301), and the extension indicator is generated when the first Internet-of vehicles device determines whether the second system information needs to be sent outside the physical broadcast channel;
extracting the extension indicator (302);
obtaining extension configuration information contained in the first system information in response to the extension indicator indicating that the second system information is outside the physical broadcast channel (303), wherein the extension configuration information is configured to indicate a resource position of the second system information, and the resource position indicated by the extension configuration information is a resource position other than a resource position occupied by the physical broadcast channel;
receiving the second system information sent by the first Internet-of vehicles device based on the resource position of the second system information; and
not performing the receiving of the second system information in response to the extension indicator indicating that there is no second system information.

2. The method of claim 1, wherein the second system information comprises resource pool information, wherein the resource pool information is configured to indicate a time-frequency position of a communication resource for communicating with the first Internet-of vehicles device.

3. The method of any of claims 1-2, wherein the first system information further comprises at least one of: network coverage information, a system frame number, system frame instructions, position information of a demodulation reference signal, and time indication information of a synchronous broadcast block.

4. A method for transmitting system information between Internet-of vehicles devices, performed by a first Internet-of vehicles device, the method comprising:
generating (401) an extension indicator, wherein the extension indicator is configured to indicate whether there is second system information outside a physical broadcast channel, and the extension indicator is generated when the first Internet-of vehicles device determines whether the second system information needs to be sent outside the physical broadcast channel;
generating (402) first system information containing the extension indicator;
sending (403) the physical broadcast channel carrying the first system information via a side link, such that a second Internet-of vehicles device receiving the physical broadcast channel receives the second system information in response to the extension indicator indicating that there is the second system information outside the physical broadcast channel;
sending the second system information in response to the extension indicator indicating that there is the second system information outside the physical broadcast channel; and
not sending the second system information in response to the extension indicator indicating that there is no second system information,
wherein generating the first system information containing the extension indicator comprises:
generating the first system information containing the extension indicator and extension configuration information in response to that there is the second system information outside the physical broadcast channel, wherein the extension configuration information is configured to indicate a resource position of the second system information, and the resource position indicated by the extension configuration information is a resource position other than a resource position occupied by the physical broadcast channel.

5. The method of claim 4, further comprising:
sending the second system information based on the resource position of the second system information.

6. An apparatus for transmitting system information between Internet-of vehicles devices, comprising:
a channel receiving module (701), configured to receive a physical broadcast channel sent by a first Internet-of vehicles device via a side link, wherein the physical broadcast channel carries first system information, the first system information comprises an extension indicator which is configured to indicate whether there is second system information outside the physical broadcast channel, and the extension indicator is generated when the first Internet-of vehicles device determines whether the second system information needs to be sent outside the physical broadcast channel;
an extracting module (702), configured to extract the extension indicator; and
an information receiving module (703), configured to obtain extension configuration information contained in the first system information in response to the extension indicator indicating that there is the second system information outside the physical broadcast channel and receive the second system information sent by the first Internet-of vehicles device based on the resource position of the second system information, and not receive the second system information in response to the extension indicator indicating that there is no second system information,
wherein the extension configuration information is configured to indicate a resource position of the second system information, and the resource position indicated by the extension configuration information is a resource position other than a resource position occupied by the physical broadcast channel.

7. An apparatus for transmitting system information between Internet-of vehicles devices, comprising:
a first generating module (801), configured generate an extension indicator, wherein the extension indicator is configured to indicate whether there is second system information outside the physical broadcast channel, and the extension indicator is generated when a first Internet-of vehicles device determines whether the second system information needs to be sent outside the physical broadcast channel;
a second generating module (802), configured generate first system information containing the extension indicator; and
a channel sending module (803), configured to send a physical broadcast channel carrying the first system information via a sidelink, such that a second Internet-of vehicles device receiving the physical broadcast channel receives the second system information in response to the extension indicator indicating that there is the second system information outside the physical broadcast channel, send the second system information in response to the extension indicator indicating that there is the second system information outside the physical broadcast channel; and not send the second system information in response to the extension indicator indicating that there is no second system information,
wherein the second generating module (802) is configured to generate the first system information containing the extension indicator and extension configuration information in response to that there is the second system information outside the physical broadcast channel, wherein the extension configuration information is configured to indicate a resource position of the second system information, and the resource position indicated by the extension configuration information is a resource position other than a resource position occupied by the physical broadcast channel.

8. A computer readable storage medium, wherein the computer readable storage medium comprises executable instructions that, when executing by a processor in a second Internet-of vehicles device, cause the processor to implement the method for transmitting system information between Internet-of vehicles devices according to any one of claims 1-3.

9. A computer readable storage medium, wherein the computer readable storage medium comprises executable instructions that, when executing by a processor in a first Internet-of vehicles device, cause the processor to implement the method for transmitting system information between Internet-of vehicles devices according to any one of claims 4-5.

## Patentansprüche

1. Verfahren zum Übertragen von Systeminformationen zwischen Internet-of-Vehicles-Vorrichtungen, das von einer zweiten Internet-of-Vehicles-Vorrichtung durchgeführt wird, wobei das Verfahren umfasst:
Empfangen eines Physical Broadcast Channel, der von einer ersten Internet-of-Vehicles-Vorrichtung über einen Sidelink gesendet wird, wobei der Physical Broadcast Channel erste Systeminformationen trägt, wobei die ersten Systeminformationen einen Erweiterungsindikator umfassen, der dazu ausgebildet ist, anzuzeigen, ob zweite Systeminformationen außerhalb des Physical Broadcast Channel vorliegen (301), und wobei der Erweiterungsindikator erzeugt wird, wenn die erste Internet-of-Vehicles-Vorrichtung bestimmt, ob die zweiten Systeminformationen außerhalb des Physical Broadcast Channel gesendet werden müssen;
Extrahieren des Erweiterungsindikators (302);
Erhalten von Erweiterungskonfigurationsinformationen, die in den ersten Systeminformationen enthalten sind, als Reaktion darauf, dass der Erweiterungsindikator anzeigt, dass die zweiten Systeminformationen außerhalb des Physical Broadcast Channel liegen (303), wobei die Erweiterungskonfigurationsinformationen dazu ausgebildet sind, eine Ressourcenposition der zweiten Systeminformationen anzuzeigen, und wobei die von den Erweiterungskonfigurationsinformationen angezeigte Ressourcenposition eine Ressourcenposition ist, die sich von einer Ressourcenposition unterscheidet, die von dem Physical Broadcast Channel belegt wird;
Empfangen der zweiten Systeminformationen, die von der ersten Internet-of-Vehicles-Vorrichtung gesendet werden, basierend auf der Ressourcenposition der zweiten Systeminformationen; und
nicht Durchführen des Empfangs der zweiten Systeminformationen als Reaktion darauf, dass der Erweiterungsindikator angibt, dass keine zweiten Systeminformationen vorliegen.

2. Verfahren nach Anspruch 1, wobei die zweiten Systeminformationen Ressourcenpoolinformationen umfassen, wobei die Ressourcenpoolinformationen dazu ausgebildet sind, eine Zeitfrequenzposition einer Kommunikationsressource zur Kommunikation mit der ersten Internet-of-Vehicles-Vorrichtung anzuzeigen.

3. Verfahren nach einem der Ansprüche 1-2, wobei die ersten Systeminformationen ferner mindestens eines aus Folgendem umfassen: Netzabdeckungsinformationen, eine Systemrahmennummer, Systemrahmenanweisungen, Positionsinformationen eines Demodulationsreferenzsignals, und Zeitanzeigeinformationen eines synchronen Broadcast-Blocks.

4. Verfahren zum Übertragen von Systeminformationen zwischen Internet-of-Vehicles-Vorrichtungen, das von einer ersten Internet-of-Vehicles-Vorrichtung durchgeführt wird, wobei das Verfahren umfasst:
Erzeugen (401) eines Erweiterungsindikators, wobei der Erweiterungsindikator dazu ausgebildet ist, anzuzeigen, ob zweite Systeminformationen außerhalb eines Physical Broadcast Channel vorliegen, und wobei der Erweiterungsindikator erzeugt wird, wenn die erste Internet-of-Vehicles-Vorrichtung bestimmt, ob die zweiten Systeminformationen außerhalb des Physical Broadcast Channel gesendet werden müssen;
Erzeugen (402) erster Systeminformationen, die den Erweiterungsindikator enthalten;
Senden (403) des Physical Broadcast Channel, der die ersten Systeminformationen trägt, über einen Sidelink, so dass eine zweite Internet-of-Vehicles-Vorrichtung, die den Physical Broadcast Channel empfängt, die zweiten Systeminformationen als Reaktion darauf empfängt, dass der Erweiterungsindikator anzeigt, dass die zweiten Systeminformationen außerhalb des Physical Broadcast Channel vorliegen;
Senden der zweiten Systeminformationen als Reaktion darauf, dass der Erweiterungsindikator anzeigt, dass die zweiten Systeminformationen außerhalb des Physical Broadcast Channel vorliegen; und
nicht Senden der zweiten Systeminformationen als Reaktion darauf, dass der Erweiterungsindikator anzeigt, dass keine zweiten Systeminformationen vorliegen,
wobei das Erzeugen der ersten Systeminformationen, die den Erweiterungsindikator enthalten, umfasst:
Erzeugen der ersten Systeminformationen, die den Erweiterungsindikator und Erweiterungskonfigurationsinformationen enthalten, als Reaktion darauf, dass die zweiten Systeminformationen außerhalb des Physical Broadcast Channel liegen, wobei die Erweiterungskonfigurationsinformationen dazu ausgebildet sind, eine Ressourcenposition der zweiten Systeminformationen anzuzeigen, und wobei die von den Erweiterungskonfigurationsinformationen angezeigte Ressourcenposition eine Ressourcenposition ist, die sich von einer Ressourcenposition unterscheidet, die von dem Physical Broadcast Channel belegt wird.

5. Verfahren nach Anspruch 4, das ferner umfasst:
Senden der zweiten Systeminformationen basierend auf der Ressourcenposition der zweiten Systeminformationen.

6. Vorrichtung zum Übertragen von Systeminformationen zwischen Internet-of-Vehicles-Vorrichtungen, die aufweist:
ein erstes Kanalempfangsmodul (701), das dazu ausgebildet ist, einen Physical Broadcast Channel zu empfangen, der von einer ersten Internet-of-Vehicles-Vorrichtung über einen Sidelink gesendet wird, wobei der Physical Broadcast Channel erste Systeminformationen trägt, wobei die Systeminformationen einen Erweiterungsindikator umfassen, der dazu ausgebildet ist, anzuzeigen, ob zweite Systeminformationen außerhalb des Physical Broadcast Channel vorliegen, und wobei der Erweiterungsindikator erzeugt wird, wenn die erste Internet-of-Vehicles-Vorrichtung bestimmt, ob die zweiten Systeminformationen außerhalb des Physical Broadcast Channel gesendet werden müssen;
ein Extraktionsmodul (702), das dazu ausgebildet ist, den Erweiterungsindikator zu extrahieren; und
ein Informationsempfangsmodul (703), das dazu ausgebildet ist, Erweiterungskonfigurationsinformationen, die in den ersten Systeminformationen enthalten sind, als Reaktion darauf zu erhalten, dass der Erweiterungsindikator anzeigt, dass die zweiten Systeminformationen außerhalb des Physical Broadcast Channel liegen, und die zweiten Systeminformationen zu empfangen, die von der ersten Internet-of-Vehicles-Vorrichtung gesendet werden, basierend auf der Ressourcenposition der zweiten Systeminformationen, und
die zweiten Systeminformationen als Reaktion darauf nicht zu empfangen, dass der Erweiterungsindikator angibt, dass keine zweiten Systeminformationen vorliegen,
wobei die Erweiterungskonfigurationsinformationen dazu ausgebildet sind, eine Ressourcenposition der zweiten Systeminformationen anzuzeigen, und wobei die von den Erweiterungskonfigurationsinformationen angezeigte Ressourcenposition eine Ressourcenposition ist, die sich von einer Ressourcenposition unterscheidet, die von dem Physical Broadcast Channel belegt wird.

7. Vorrichtung zum Übertragen von Systeminformationen zwischen Internet-of-Vehicles-Vorrichtungen, die aufweist:
ein erstes Erzeugungsmodul (801), das dazu ausgebildet ist, einen Erweiterungsindikator zu erzeugen, wobei der Erweiterungsindikator dazu ausgebildet ist, anzuzeigen, ob zweite Systeminformationen außerhalb des Physical Broadcast Channel vorliegen, und wobei der Erweiterungsindikator erzeugt wird, wenn eine erste Internet-of-Vehicles-Vorrichtung bestimmt, ob die zweiten Systeminformationen außerhalb des Physical Broadcast Channel gesendet werden müssen;
ein zweites Erzeugungsmodul (802), das dazu ausgebildet ist, erste Systeminformationen zu erzeugen, die den Erweiterungsindikator enthalten; und
ein Kanalsendemodul (803), das dazu ausgebildet ist, einen Physical Broadcast Channel, der die ersten Systeminformationen trägt, über einen Sidelink zu senden, so dass eine zweite Internet-of-Vehicles-Vorrichtung, die den Physical Broadcast Channel empfängt, die zweiten Systeminformationen als Reaktion darauf empfängt, dass der Erweiterungsindikator anzeigt, dass die zweiten Systeminformationen außerhalb des Physical Broadcast Channel vorliegen, die zweiten Systeminformationen als Reaktion darauf zu senden, dass der Erweiterungsindikator anzeigt, dass die zweiten Systeminformationen außerhalb des Physical Broadcast Channel vorliegen, und die zweiten Systeminformationen als Reaktion darauf nicht sendet, dass der Erweiterungsindikator anzeigt, dass keine zweiten Systeminformationen vorliegen,
wobei das zweite Erzeugungsmodul (802) dazu ausgebildet ist, die ersten Systeminformationen, die den Erweiterungsindikator und die Erweiterungskonfigurationsinformationen enthalten, als Reaktion darauf zu erzeugen, dass die zweiten Systeminformationen außerhalb des Physical Broadcast Channel vorliegen, wobei die Erweiterungskonfigurationsinformationen dazu ausgebildet sind, eine Ressourcenposition der zweiten Systeminformationen anzuzeigen, und wobei die von den Erweiterungskonfigurationsinformationen angezeigte Ressourcenposition eine Ressourcenposition ist, die sich von einer Ressourcenposition unterscheidet, die von dem Physical Broadcast Channel belegt wird.

8. Computerlesbares Speichermedium, wobei das computerlesbare Speichermedium ausführbare Anweisungen aufweist, die bei Ausführung durch einen Prozessor in einer zweiten Internet-of-Vehicles-Vorrichtung bewirken, dass der Prozessor das Verfahren zum Übertragen von Systeminformationen zwischen Internet-of-Vehicles-Vorrichtungen nach einem der Ansprüche 1-3 implementiert.

9. Computerlesbares Speichermedium, wobei das computerlesbare Speichermedium ausführbare Anweisungen aufweist, die bei Ausführung durch einen Prozessor in einer ersten Internet-of-Vehicles-Vorrichtung bewirken, dass der Prozessor das Verfahren zum Übertragen von Systeminformationen zwischen Internet-of-Vehicles-Vorrichtungen nach einem der Ansprüche 4-5 implementiert.

## Revendications

1. Procédé de transmission d'informations système entre des dispositifs d'Internet des véhicules, mis en oeuvre par un second dispositif d'Internet des véhicules, le procédé comprenant :
la réception d'un canal de diffusion physique envoyé par un premier dispositif d'Internet des véhicules par l'intermédiaire d'une liaison latérale, dans lequel le canal de diffusion physique transporte des premières informations système, les premières informations système comprennent un indicateur d'extension qui est configuré pour indiquer s'il y a des secondes informations système à l'extérieur du canal de diffusion physique (301), et l'indicateur d'extension est généré lorsque le premier dispositif d'Internet des véhicules détermine si les secondes informations système doivent être envoyées à l'extérieur du canal de diffusion physique ;
l'extraction de l'indicateur d'extension (302) ;
l'obtention d'informations de configuration d'extension contenues dans les premières informations système en réponse à l'indicateur d'extension indiquant que les secondes informations système sont à l'extérieur du canal de diffusion physique (303), les informations de configuration d'extension étant configurées pour indiquer une position de ressource des secondes informations système, et la position de ressources indiquée par les informations de configuration d'extension étant une position de ressources autre qu'une position de ressources occupée par le canal de diffusion physique ;
la réception des secondes informations système envoyées par le premier dispositif d'Internet des véhicules en fonction de la position des ressources des secondes informations système ; et
la non-exécution de la réception des secondes informations système en réponse à l'indicateur d'extension indiquant qu'il n'y a pas de secondes informations système.

2. Procédé selon la revendication 1, dans lequel les secondes informations système comprennent des informations de groupe de ressources, dans lequel les informations de groupe de ressources sont configurées pour indiquer une position temps-fréquence d'une ressource de communication pour communiquer avec le premier dispositif d'Internet des véhicules.

3. Procédé selon l'une quelconque des revendications 1 ou 2, dans lequel les premières informations système comprennent en outre au moins l'un parmi : des informations de couverture réseau, un numéro de trame système, des instructions de trame système, des informations de position d'un signal de référence de démodulation, et des informations d'indication temporelle
d'un bloc de diffusion synchrone.

4. Procédé de transmission d'informations système entre des dispositifs d'Internet des véhicules, mis en oeuvre par un premier dispositif d'Internet des véhicules, le procédé comprenant :
la génération (401) d'un indicateur d'extension, dans lequel l'indicateur d'extension est configuré pour indiquer s'il y a des secondes informations système à l'extérieur d'un canal de diffusion physique, et l'indicateur d'extension est généré lorsque le premier dispositif d'Internet des véhicules détermine si les secondes informations système doivent être envoyées à l'extérieur du canal de diffusion physique ;
la génération (402) des premières informations système contenant l'indicateur d'extension ;
l'envoi (403) du canal de diffusion physique portant les premières informations système par l'intermédiaire d'une liaison latérale, de telle sorte qu'un second dispositif d'Internet des véhicules recevant le canal de diffusion physique reçoit les secondes informations système en réponse à l'indicateur d'extension indiquant la présence des secondes informations système à l'extérieur du canal de diffusion physique ;
l'envoi des secondes informations système en réponse à l'indicateur d'extension indiquant la présence des secondes informations système à l'extérieur du canal de diffusion physique ; et
le non-envoi des secondes informations système en réponse à l'indicateur d'extension indiquant qu'il n'y a pas de secondes informations système,
dans lequel la génération des premières informations système contenant l'indicateur d'extension comprend :
la génération des premières informations système contenant les informations de configuration d'indicateur d'extension et de configuration d'extension en réponse à la présence des secondes informations système à l'extérieur du canal de diffusion physique, dans lequel les informations de configuration d'extension sont configurées pour indiquer une position de ressource des secondes informations système, et la position de ressource indiquée par les informations de configuration d'extension sont une position de ressources autre qu'une position de ressources occupée par le canal de diffusion physique.

5. Procédé selon la revendication 4, comprenant en outre :
l'envoi des secondes informations système en fonction de la position de ressources des secondes informations système.

6. Appareil pour transmettre des informations système entre des dispositifs d'Internet des véhicules, comprenant :
un module de réception de canal (701), configuré pour recevoir un canal de diffusion physique envoyé par un premier dispositif d'Internet des véhicules par l'intermédiaire d'une liaison latérale, dans lequel le canal de diffusion physique transporte des premières informations système, les premières informations système comprennent un indicateur d'extension qui est configuré pour indiquer s'il y a des secondes informations système à l'extérieur du canal de diffusion physique, et l'indicateur d'extension est généré lorsque le premier dispositif d'Internet des véhicules détermine si les secondes informations système doivent être envoyées à l'extérieur du canal de diffusion physique ;
un module d'extraction (702), configuré pour extraire l'indicateur d'extension ; et
un module de réception d'informations (703), configuré pour obtenir des informations de configuration d'extension contenues dans les premières informations système en réponse à l'indicateur d'extension indiquant la présence des secondes informations système à l'extérieur du canal de diffusion physique et recevoir les secondes informations système envoyées par le premier dispositif d'Internet des véhicules en fonction de la position de ressources des secondes informations système, et ne pas recevoir les secondes informations système en réponse à l'indicateur d'extension indiquant qu'il n'y a pas de secondes informations système,
dans lequel les informations de configuration d'extension sont configurées pour indiquer une position de ressources des secondes informations système, et la position de ressources indiquée par les informations de configuration d'extension est une position de ressources autre qu'une position de ressources occupée par le canal de diffusion physique.

7. Appareil pour transmettre des informations système entre des dispositifs d'Internet des véhicules, comprenant :
un premier module de génération (801), configuré pour générer un indicateur d'extension, dans lequel l'indicateur d'extension est configuré pour indiquer s'il y a des secondes informations système à l'extérieur du canal de diffusion physique, et l'indicateur d'extension est généré lorsqu'un premier dispositif d'Internet des véhicules détermine si les secondes informations système doivent être envoyées à l'extérieur du canal de diffusion physique ;
un second module de génération (802), configuré pour générer de premières informations système contenant
l'indicateur d'extension ; et
un module d'envoi de canal (803), configuré pour envoyer un canal de diffusion physique portant les premières informations système via une liaison latérale, de telle sorte qu'un second dispositif d'Internet des véhicules recevant le canal de diffusion physique reçoit les secondes informations système en réponse à l'indicateur d'extension indiquant la présence des secondes informations système à l'extérieur du canal de diffusion physique, envoyer les secondes informations système en réponse à l'indicateur d'extension indiquant la présence des secondes informations système à l'extérieur du canal de diffusion physique ; et ne pas envoyer les secondes informations système en réponse à l'indicateur d'extension indiquant qu'il n'y a pas de seconde information système,
dans lequel le second module de génération (802) est configuré pour générer les premières informations système contenant les informations de configuration d'indicateur d'extension et de configuration en réponse à la présence des secondes informations système à l'extérieur du canal de diffusion physique, dans lequel les informations de configuration d'extension sont configurées pour indiquer une position de ressources des secondes informations système, et la position de ressources indiquée par les informations de configuration d'extension est une position de ressources autre qu'une position de ressources occupée par le canal de diffusion physique.

8. Support de stockage lisible par ordinateur, dans lequel le support de stockage lisible par ordinateur comprend des instructions exécutables qui, lorsqu'elles sont exécutées par un processeur dans un second dispositif d'Internet des véhicules, amènent le processeur à mettre en oeuvre le procédé de transmission d'informations système entre les dispositifs d'Internet des véhicules selon l'une quelconque des revendications 1 à 3.

9. Support de stockage lisible par ordinateur, dans lequel le support de stockage lisible par ordinateur comprend des instructions exécutables qui, lorsqu'elles sont exécutées par un processeur dans un premier dispositif d'Internet des véhicules, amènent le processeur à mettre en oeuvre le procédé de transmission d'informations système entre les dispositifs d'Internet des véhicules selon l'une quelconque des revendications 4 à 5.
